(19) **Europäisches Patentamt European Patent Office Office européen des brevets**

(11) **EP 3 986 990 B1**

(12) **FASCICULE DE BREVET EUROPEEN**

(45) Date de publication et mention de la délivrance du brevet:
**22.10.2025 Bulletin 2025/43**

(21) Numéro de dépôt: **20742356.7**

(22) Date de dépôt: **17.06.2020**

(51) Classification Internationale des Brevets (IPC):
**C10L 5/44** *(2006.01)*    **C10L 9/08** *(2006.01)*
**C10B 53/02** *(2006.01)*    **D21C 3/02** *(2006.01)*
**B09B 3/00** *(2022.01)*

(52) Classification Coopérative des Brevets (CPC):
**C10L 5/44; B07B 1/00; B09B 3/45; C10B 49/02; C10B 53/02;** B07B 2230/00; Y02E 50/10; Y02E 50/30

(86) Numéro de dépôt international:
**PCT/FR2020/051045**

(87) Numéro de publication internationale:
**WO 2020/260799 (30.12.2020 Gazette 2020/53)**

(54) **PROCEDE DE VAPOCRAQUAGE COMPRENANT UNE ETAPE DE SEPARATION ET TRAITEMENT DIFFERENTIEL DES PARTICULES OBTENUES EN FONCTION D'UNE VALEUR SEUIL**

DAMPFCRACKVERFAHREN MIT EINEM TRENNUNGSSCHRITT UND DER UNTERSCHIEDLICHEN BEHANDLUNG DER ERHALTENEN PARTIKEL GEMÄSS EINES SCHWELLENWERTS

STEAM CRACKING PROCESS COMPRISING A SEPARATION STEP AND DIFFERENTIAL TREATMENT OF THE OBTAINED PARTICLES ACCORDING TO A THRESHOLD VALUE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**ME**

(30) Priorité: **24.06.2019 FR 1906796**

(43) Date de publication de la demande:
**27.04.2022 Bulletin 2022/17**

(73) Titulaire: **Europeenne de Biomasse**
**75009 Paris (FR)**

(72) Inventeurs:
• **DESPRES, Jean-Luc**
**51360 VERZENAY (FR)**
• **HABAS, Thomas**
**75013 PARIS (FR)**
• **QUINTERO-MARQUEZ, Adriana**
**78110 LE VESINET (FR)**
• **MARTEL, Frédéric**
**51100 REIMS (FR)**

(74) Mandataire: **IP Trust**
**2, rue de Clichy**
**75009 Paris (FR)**

(56) Documents cités:
CN-A- 102 949 969    US-A1- 2012 260 563
US-A1- 2013 341 569

# Description

La présente invention a trait au domaine des biocombustibles solides obtenus par vapocraquage. Plus particulièrement, la présente invention concerne un procédé de traitement par vapocraquage de biomasse ligno-cellulosique dans lequel la poudre obtenue est traitée afin de séparer les particules en deux catégories en fonction d'une valeur seuil, chaque catégorie étant traitée différemment.

## Domaine de l'invention

La production d'énergie (électrique et thermique) d'origine renouvelable peut se faire à partir de l'environnement (soleil, vent, marée, houle, géothermie, hydraulique) ou à partir de biomasse. A l'exception de la biomasse, l'hydraulique de rivière ou de barrage, et la géothermie, ces énergies renouvelables sont intermittentes sauf si les moyens de stockage de l'énergie se développaient. Et seule la biomasse constitue une énergie primaire transportable sur son lieu de transformation en chaleur et/ou électricité. Mais la biomasse est en fait une énergie peu dense, variable et périssable. La transformation de biomasse lignocellulosique (bois, résidus agricoles, coproduits de l'agriculture et de l'agro-industrie) en un composé dense énergétiquement, transportable et facilement stockable permet de développer et consolider une filière industrielle d'énergie stationnaire (biocombustible utilisé en un point fixe, le foyer, contrairement aux biocarburants) et de réduire les impacts environnementaux (émission $CO_2$ fossile, avec une biomasse sans fertilisants ni phytosanitaires).

Le traitement thermique de la biomasse par vapocraquage permet cette densification de l'énergie, en homogénéisant la biomasse en une poudre vapocraquée selon des conditions paramétriques précises, notamment de granulométrie, température et temps de séjour. La poudre est ensuite granulée pour faciliter son transport, son stockage et son usage.

Il s'agit donc de s'assurer que le procédé de vapocraquage est en mesure d'assurer un produit constant, à savoir une poudre sortante stable en qualité et en capacité d'être transformée ou utilisée en aval du procédé pour l'application désirée. Cette poudre présente un pouvoir calorifique et une composition apte à être utilisée en combustion, et une capacité à être granulée.

Aujourd'hui, la meilleure solution pour garantir le meilleur résultat du vapocraquage est de faire un approvisionnement régulier et maîtrisé d'une même qualité de biomasse. Or, dans une optique d'augmentation des volumes de traitement de biomasse aux fins de production de biocombustibles solides, il apparait intéressant d'être en mesure de traiter également une biomasse hétérogène.

Les paramètres du procédé de vapocraquage sont critiques, et pour faciliter la comparaison de différentes options, on a développé un modèle basé sur les hypothèses que la cinétique du procédé est du premier ordre et obéit à la loi d'Arrhénius, permettant de développer l'ordonnée de la réaction (R0) :

$$R0 = \int t \, exp \, [(Tr - Tb)/14.75] \, dt$$

Où Tr est la température de réaction (°C), Tb est la température de base (point d'ébullition de l'eau à la pression atmosphérique : 100°C), t est le temps de séjour (min) et 14.75 est l'énergie conventionnelle d'activation en supposant que le procédé général est hydrolytique et la conversion générale est du premier ordre. La valeur log10 de l'ordonnée de la réaction donne le facteur de sévérité (ou sévérité) qui est employé pour représenter les effets de l'explosion à la vapeur sur la biomasse :

$$Sévérité = log10 \, (R0)$$

Le problème rencontré lorsque l'on traite une biomasse hétérogène est que la poudre obtenue est elle-même hétérogène entrainant des problèmes de granulation. En effet, en fonction de la nature de la biomasse initiale et des conditions appliquées, le vapocraquage n'aura pas le même effet en termes de déstructuration de la matière. Ainsi, lorsque la matière en entrée est hétérogène, les conditions de sévérité doivent être ajustées de sorte à ne pas déstructurer totalement les matières les moins résistantes, ce qui serait néfaste pour la granulation. Lorsque les conditions de sévérité sont adaptées en fonction de la biomasse moins résistante, le vapocraquage génère des particules résiduelles issues des biomasses plus résistantes, qui elles aussi perturbent le procédé de granulation.

Le non-respect de la qualité finale et du cahier des charges de granulation peut être rédhibitoire, que ce soit par un traitement laissant de grosses particules ou un traitement trop drastique dégradant le produit et son comportement à la granulation.

Il existe donc un besoin de disposer d'un procédé de vapocraquage adapté au traitement d'une biomasse hétérogène pour la fabrication de granulés noirs de qualité contrôlée.

Le vapocraquage diffère d'un prétraitement hydrothermique, aussi appelé fractionnement aqueux, solvolyse, hydrothermolyse ou traitement hydrothermique, en ce que ce dernier consiste à utiliser de l'eau à haute température et à haute pression afin de promouvoir la désintégration et la séparation de la matrice lignocellulosique. Cette technique n'est pas adaptée à la production de granulés noirs puisque les produits obtenus sont majoritairement liquides.

La pyrolyse est la décomposition chimique d'un composé organique par chauffage intense en absence d'oxygène. Les composés obtenus après pyrolyse diffèrent dans leurs caractéristiques de ceux obtenus par vapocraquage. Le vapocraquage ne peut être assimilé à une technique de pyrolyse en ce qu'il emploie une explosion à la vapeur et se fait en présence d'oxygène.

Il faut également différencier les procédés de torréfaction qui se caractérisent par un traitement thermochimique compris entre 100 et 300°C permettant de modifier une partie de la matière organique pour casser les fibres tout en éliminant l'eau.

## Etat de la technique

Le brevet chinois CN102 949 969A divulgue un système de pyrolyse de matériau carboné solide ou ayant une viscosité élevée avec un mélangeur de duvet et un réchauffeur de caloporteur catalytique, et un procédé d'utilisation du système de réacteur. Ce procédé comprend en outre un séparateur solide-solide ou solide-liquide pour permettra la séparation des produit solide ou liquide pyrolysée du caloporteur catalytique épuisé.

Le brevet américain US2012/260563A1 décrit un procédé de transformation thermochimique de la biomasse par hydro-pyrolyse (réaction de liquide de conventionnel de pyrolyse avec de l'hydrogène et présence de catalyseurs solide) afin d'obtenir des produits liquides. Ce procédé comprend notamment des dispositifs de séparation inertielle.

Le brevet US2014/298716A1 concerne un procédé de séchage et de torréfaction de la biomasse ligno-cellulosique. L'installation de séchage et de torréfaction comprend deux circuits. Le second circuit comprend un séparateur à cyclone qui permet d'éliminer toutes les particules volatiles de grande taille.

Le brevet US2013/341569 décrit une installation destinée à générer du gaz de synthèse comprenant les étapes de : (I) broyage de la biomasse ; (II) prétraitement hydrique de la biomasse ; (III) explosion à la vapeur de la biomasse prétraitée ; (IV) séchage de la biomasse obtenu à l'étape précédente ; (V) torréfaction de la biomasse obtenue à l'étape précédente ; gazéification de la biomasse torréfiée. Ce document décrit un contrôle de la taille des particules des particules de biomasse produites à partir de l'étape d'explosion de vapeur et de l'unité de torréfaction. Une analyse granulométrique via un traitement d'image numérique est réalisée sur la biomasse vapocraquée.

Enfin, le brevet US2016/251611A1 divulgue un procédé de croissance d'un organisme microbien, comprenant la culture de l'organisme microbien en présence d'une composition hydrolysée obtenue à partir d'une charge ligno-cellulosique ayant subie une étape d'explosion à la vapeur. La biomasse ligno-cellulosique traitée, comprend en outre, une étape de séparation des fibres en fonction d'une valeur seuil, telle que la taille des fibres.

## Inconvénients de l'art antérieur

Les solutions de l'art antérieur ne sont pas totalement satisfaisantes car elles emploient des techniques ou utilisent un produit non-pulvérulent. En effet, il s'agit de techniques de :

- pyrolyse conduisant à l'obtention de composés différents de ceux obtenu par vapocraquage
- torréfaction, qui est une technologie présentant un rendement acceptable (10% à 20% de perte), mais le prix reste prohibitif, et la technologie n'est pas mature.

## Exposé de l'invention

Pour répondre à ce besoin, les inventeurs ont mis au point un procédé de vapocraquage avec un facteur de sévérité donné caractérisé en ce qu'il comporte une étape de traitement des produits pulvérulents pour séparer les particules supérieures à une valeur seuil et les particules inférieures à ladite valeur seuil, et de traitement différencié des particules de la première catégorie et des particules de la deuxième catégorie.

Ce procédé permet d'une part de granuler une poudre homogène débarrassée des particules résistantes et d'autre part de traiter les refus de matière mal dégradée par un retour dans l'enceinte de vapocraquage.

## Avantages de l'invention

L'invention consiste donc à mettre en place un crible pour séparer les particules résistantes mal dégradées de la poudre apte à être granulée ou la poudre de granulométrie trop fine de la poudre apte à être granulée.

Le principal avantage de ce procédé est qu'il permet de produire des granulés noirs de qualité à partir de n'importe quel type de biomasse et en particulier de biomasse hétérogène. En effet, éliminer les particules mal dégradées de la poudre à granuler améliore la qualité des granulés qui sont alors plus cohésifs, plus hydrophobes, plus énergétiques.

Ce procédé permet donc de répondre à la fois au cahier des charges du procédé global de granulation et au cahier des charges du produit final en termes de qualité et de constance de qualité.

Ce procédé permet de récupérer les particules mal dégradées et de les valoriser en lessoumettant une seconde fois à un traitement par vapocraquage.

On notera que si l'augmentation de la sévérité du traitement pourrait venir à bout des particules restées grossières, cela aurait pour conséquence de dégrader les particules de bois plus labiles, et augmenter aussi la perte matière par dégradation trop poussée des molécules sous forme polymériques en composés volatils (par exemple les hémicelluloses les plus sensibles à la température et au temps de séjour). Il y a donc un avantage à recycler en tête de procédé les refus de crible post-vapocraquage de la poudre plutôt que d'augmenter la sévérité, voire à les soumettre isolément ou par campagne de regroupement à des conditions de sévérité plus adaptées.

## DESCRIPTION DETAILLEE DE L'INVENTION

Un premier objet de l'invention concerne un procédé de vapocraquage d'une biomasse ligno-cellulosique caractérisé en ce qu'il comporte une étape de traitement des produits pulvérulents pour séparer les particules supérieures à une valeur seuil et les particules inférieures à ladite valeur seuil, et de traitement différencié des particules de la première catégorie et des particules de la deuxième catégorie.

Un tel procédé comprend les étapes suivantes :

- Vapocraquage d'une biomasse ligno-cellulosique
- Criblage des produits pulvérulents obtenu par vapocraquage pour séparer les particules supérieures à une valeur seuil (dite « première catégorie ») et les particules inférieures à ladite valeur seuil (dites « deuxième catégorie »)
- Traitement différencié des particules de la première catégorie et des particules de la deuxième catégorie.

Le facteur de sévérité appliqué lors de l'étape de vapocraquage sera déterminé en fonction de la biomasse à traiter. Il est déterminé à partir de la valeur du Log10 de l'ordonné de la réaction.

$$\text{Sévérité} = \log 10 \, (R0)$$

Il s'agit d'une caractéristique inhérente au procédé de vapocraquage, que l'homme du métier sait mesurer et adapter. Typiquement, le facteur de sévérité sera compris entre 4,0 et 4,02, et plus précisément entre 4,05 et 4,15

Ce procédé met en œuvre un criblage visant à séparer les particules de vapocraquage en deux catégories en vue d'un traitement différencié. La valeur seuil peut être par exemple la masse, la dimension, la section ou la densité des particules mais également leur comportement aéraulique ou tout autre critère permettant de séparer des particules trop fines ou trop grosses, trop denses... vis-à-vis d'une valeur seuil.

Dans un mode de réalisation préféré, l'une des deux catégories de particules est granulée pour la préparation de granulés noirs.

Dans un mode de réalisation particulier, les particules à granuler correspondent à la catégorie de particules inférieures à la valeur-seuil. Il s'agit d'éliminer les particules les plus grosses et/ou les plus denses et/ ou les plus résistantes.

Parmi les autres qualités attendues comme la résistance à l'eau, la tenue mécanique et le fort pouvoir calorifique, de manière générale, les granulés noirs peuvent être qualifiés par une constitution majoritaire (> 80%) de particules de taille inférieure à 500 $\mu$m, et quelques pourcents de particules supérieures au millimètre voire quelques millimètres.

La résistance à l'eau des granulés peut être évaluée par trempage, à savoir le produit doit prendre peu d'eau pendant le trempage et les qualités du produit, comme sa tenue mécanique, ne doivent pas être altérées après trempage.

La tenue mécanique des granulés est associée à une résistance aux chocs et une durabilité mécanique.

Le pouvoir calorifique des granulés doit être augmenté par rapport à celui de la biomasse initiale.

Le facteur de sévérité de l'étape de vapocraquage est fixé selon la nature de la biomasse et le type de poudre que l'on souhaite recueillir.

Les particules qui sont éliminées subissent un traitement différent de la granulation et sont collectées et recyclées via une réintroduction dans l'enceinte de vapocraquage, immédiatement après séparation ou de manière différée.

Les différentes possibilités de traitement des particules éliminées sont autant de modes de réalisation particuliers de l'invention.

Dans un mode de réalisation particulier, les particules supérieures à la valeur-seuil (résistantes, trop grosses et/ou trop denses par exemple) sont réintroduites directement dans l'enceinte de vapocraquage pour être à nouveau traitées au sein du procédé en continu.

Dans un autre mode de réalisation particulier, les particules supérieures à la valeur-seuil sont collectées pour être recyclées différemment. Elles peuvent être réintroduites ultérieurement dans l'enceinte de vapocraquage à des conditions de sévérité différentes.

Ce procédé permet donc de traiter une biomasse hétérogène et de valoriser l'ensemble de cette biomasse.

Cette biomasse hétérogène peut consister en un mélange de bois jeunes et de bois vieux, un mélange de bois provenant d'espèces différentes, des bois de déchets...

### Revendications

1. Procédé de vapocraquage d'une biomasse ligno-cellulosique **caractérisé en ce qu'**il comporte :

   - une étape de vapocraquage d'une biomasse ligno-cellulosique
   - une étape de criblage des produits pulvérulents obtenus à l'issue de l'étape de vapocraquage pour séparer : les particules supérieures à une valeur seuil dans une première catégorie et les particules inférieures à ladite valeur seuil dans une seconde catégorie, dans laquelle ladite première catégorie de particules est éliminée tandis que ladite seconde catégorie est granulée, et
   - une étape de collecte et recyclage des particules éliminées de la première catégorie dans laquelle lesdites particules sont réintroduites dans l'enceinte de vapocraquage, immédiatement après séparation ou de manière différée

**2.** Procédé selon la revendication 1 dans lequel ladite valeur seuil est choisie parmi la masse, la dimension, la section, la densité des particules, le comportement aéraulique desdites particules.

**3.** Procédé selon l'une des revendications précédentes dans lequel ladite biomasse est hétérogène.

**Patentansprüche**

**1.** Verfahren zum Steamcracking von lignozellulosehaltiger Biomasse, **dadurch gekennzeichnet, dass** es Folgendes umfasst:

- einen Schritt zum Steamcracking einer lignozellulosehaltigen Biomasse
- einen Schritt zum Sieben der nach dem Steamcrackingschritt erhaltenen pulverförmigen Produkte, um Partikel, die größer als ein Schwellenwert sind, in eine erste Kategorie und Partikel, die kleiner als dieser Schwellenwert sind, in eine zweite Kategorie zu trennen, wobei die erste Kategorie von Partikeln entfernt wird, während die zweite Kategorie granuliert wird, und
- einen Schritt zum Sammeln und Recyceln der aus der ersten Kategorie entfernten Partikel, in der diese Partikel unmittelbar nach der Abscheidung oder zeitverzögert wieder in die Steamcracking-Kammer zurückgeführt werden.

**2.** Verfahren nach Anspruch 1, wobei der Schwellenwert aus der Masse, der Abmessung, dem Querschnitt, der Dichte der Partikel und dem Luftverhalten der Partikel ausgewählt wird.

**3.** Verfahren nach einem der vorstehenden Ansprüche, wobei die Biomasse heterogen ist.

**Claims**

**1.** A method for steam cracking a lignocellulosic biomass, **characterised in that** it comprises:

- a step of steam cracking a lignocellulosic biomass
- a step of screening the pulverulent products obtained upon completion of the steam cracking step to separate: the particles above a threshold value in a first category and the particle below said threshold value in a second category, wherein said first category of particles is eliminated whereas said second category is pelletized, and
- a step of collecting and recycling the eliminated particles of the first category wherein said particles are reintroduced into the steam cracking chamber, immediately after separation or later on.

**2.** The method according to claim 1, wherein said threshold value is selected from among the mass, the dimension, the section, the density of the particles, the aeraulic behaviour of said particles.

**3.** The method according to one of the preceding claims, wherein said biomass is heterogeneous.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 102949969 A
- US 2012260563 A1
- US 2014298716 A1
- US 2013341569 A
- US 2016251611 A1